# FASCICULE DE BREVET EUROPEEN

(11) **EP 3 100 653 B1**
(45) Date de publication et mention de la délivrance du brevet: **18.04.2018**
(21) Numéro de dépôt: 16170998.5
(22) Date de dépôt: 24.05.2016
(51) Int. Cl.: A47J 27/08

(54) **AUTOCUISEUR A BAIONNETTE POURVU D'UN ORGANE DE COMMANDE**
SCHNELLKOCHTOPF MIT BAJONETTVERSCHLUSS, DER MIT EINEM STEUERORGAN AUSGESTATTET IST
BAYONET PRESSURE COOKER PROVIDED WITH A CONTROLLER

(30) Priorité: 02.06.2015 FR 1554999
(43) Date de publication de la demande: 07.12.2016
(73) Titulaire: SEB S.A., 69130 Ecully (FR)
(72) Inventeur: CHAMEROY, Eric, 21260 VERONNES (FR); ANOTA, Daniel, Jean, Marie, 21000 DIJON (FR); ROUSSARD, Philippe, 73340 LE NOYER (FR)
(74) Mandataire: Weber, Jean-François

(56) Documents cités:
- EP-A1- 2 732 736
- CN-B- 102 349 791
- CN-Y- 2 469 839

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein. Le document CN 102 349 791 B décrit un appareil de cuisson d'aliments sous pression. La présente invention concerne plus particulièrement un appareil de cuisson d'aliments sous pression comportant une cuve, un couvercle, ainsi qu'un système de verrouillage à baïonnette.
Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve. Il existe différents types de moyens de verrouillage bien connus dans l'art antérieur. L'un des systèmes les plus répandus est le système de verrouillage à baïonnette, qui repose sur la mise en oeuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues par repliement et découpe du bord supérieur libre de la cuve.
Un tel système de verrouillage à baïonnette donne globalement satisfaction, notamment en raison de son poids relativement faible, de sa simplicité de fabrication et de sa fiabilité.

Il présente toutefois également certains inconvénients significatifs, notamment en matière de praticité et d'ergonomie.

Tout d'abord, le principe même du verrouillage à baïonnette nécessite que l'utilisateur rapporte le couvercle sur la cuve selon un agencement spécifique précis permettant aux rampes de couvercle de passer à travers les découpes ménagées dans le bord supérieur de la cuve pour se retrouver en deçà des rampes de cuve, dans une position d'attente de verrouillage, à partir de laquelle l'utilisateur pourra ensuite amener les rampes de couvercle et de cuve en correspondance de verrouillage, par rotation du couvercle sur la cuve. Il s'avère en pratique souvent peu commode et peu ergonomique de positionner le couvercle sur la cuve selon l'agencement spécifique précis susvisé. En outre, une fois le couvercle en position d'attente de verrouillage, l'utilisateur doit ensuite exercer sur le couvercle un effort de mise en rotation significatif selon un sens prédéterminé, qui n'est pas forcément intuitif, couplé éventuellement à une pression du couvercle vers le bas. Une telle gestuelle de verrouillage est non seulement peu intuitive et malaisée, mais requiert en outre une certaine force physique, en raison notamment des frottements au niveau de la garniture d'étanchéité interposée entre le couvercle et la cuve. En pratique, le verrouillage d'un autocuiseur à baïonnette nécessite donc de rapporter correctement le couvercle sur la cuve, ce qui nécessite fréquemment plusieurs tentatives, puis de saisir l'autocuiseur à deux mains, de façon à immobiliser avec une main la cuve et à exercer avec l'autre main un effort de mise en rotation du couvercle relativement à la cuve tout en exerçant une pression vers le bas sur le couvercle, jusqu'à atteindre la configuration de verrouillage. De ce point de vue, les autocuiseurs à baïonnette s'avèrent généralement beaucoup moins faciles et pratiques à utiliser que les autocuiseurs à mâchoires par exemple, ces derniers étant toutefois beaucoup plus lourds que les autocuiseurs à baïonnette, et d'un coût de fabrication généralement plus élevé.

L'invention se propose par conséquent de remédier aux différents inconvénients exposés précédemment et de proposer un nouvel appareil de cuisson d'aliments sous pression qui soit particulièrement léger, sûr, rapide et peu coûteux à fabriquer, tout en étant particulièrement ergonomique et facile à utiliser, notamment à l'aide d'une seule main.

Un autre objet de l'invention vise à proposer un nouvel appareil de cuisson d'aliments sous pression dont le verrouillage peut être commandé de façon particulièrement simple et fiable.

Un autre objet de l'invention vise à proposer un nouvel appareil de cuisson d'aliments sous pression qui présente une capacité élevée à suggérer de manière naturelle et intuitive sa propre utilisation.

Un autre objet de l'invention vise à proposer un nouvel appareil de cuisson d'aliments sous pression qui procure un haut niveau de sécurité d'utilisation.

Un autre objet de l'invention vise à proposer un nouvel appareil de cuisson d'aliments sous pression dont la conception rend totalement inutile une éventuelle immobilisation manuelle de la cuve par l'utilisateur lorsque ce dernier commande le verrouillage du couvercle relativement à la cuve.

Un autre objet de l'invention vise à proposer un nouvel appareil de cuisson d'aliments sous pression qui met en oeuvre un mécanisme de commande du verrouillage particulièrement robuste et compact.

Un autre objet de l'invention vise à proposer un nouvel appareil de cuisson d'aliments sous pression dont la conception permet de minimiser l'effort manuel exercé par un utilisateur pour commander le verrouillage.

Un autre objet de l'invention vise à proposer un nouvel appareil de cuisson d'aliments sous pression dont le mécanisme de commande du verrouillage est particulièrement simple, léger et fiable.

Un autre objet de l'invention vise à proposer un nouvel appareil de cuisson d'aliments sous pression pourvu d'un organe de commande qui permet à la fois de commander le verrouillage et le déverrouillage de façon particulièrement intuitive.

Un autre objet de l'invention vise à proposer un nouvel appareil de cuisson d'aliments sous pression qui est facile et pratique à ranger et à laver en lave-vaisselle.
Un autre objet de l'invention vise à proposer un nouvel appareil de cuisson d'aliments sous pression qui limite considérablement le risque de voir un utilisateur soulever l'ensemble de l'appareil par le couvercle.
Un autre objet de l'invention vise à proposer un nouvel appareil de cuisson d'aliments sous pression particulièrement ergonomique et limitant le risque de voir le couvercle échapper à la prise de l'utilisateur.
Les objets assignés à l'invention sont atteints à l'aide d'un appareil de cuisson d'aliments sous pression comportant une cuve, un couvercle, ainsi qu'un système de verrouillage à baïonnette, ledit appareil comprenant un sous-ensemble de couvercle qui inclut à la fois ledit couvercle et un support attaché audit couvercle de façon que ce dernier puisse pivoter relativement audit support entre deux positions correspondant respectivement à une configuration de déverrouillage et une configuration de verrouillage dudit sous-ensemble de couvercle, le sous-ensemble de couvercle en configuration de déverrouillage et la cuve étant conçus pour être réunis selon au moins un agencement relatif prédéterminé permettant audit système de verrouillage à baïonnette de verrouiller le couvercle à la cuve par pivotement du couvercle afin de faire passer le sous-ensemble de couvercle de sa configuration de déverrouillage à sa configuration de verrouillage, ledit appareil comprenant un organe de commande du verrouillage/déverrouillage attaché audit support de façon à pouvoir être déplacé relativement à ce dernier entre des positions de verrouillage et déverrouillage, ledit appareil comprenant un dispositif de transformation du déplacement de l'organe de commande en pivotement du couvercle relativement au support pour que lesdites positions de verrouillage et déverrouillage correspondent respectivement auxdites configurations de verrouillage et déverrouillage, ledit organe de commande étant conformé pour pouvoir être saisi manuellement afin de permettre la manipulation du sous-ensemble de couvercle par son intermédiaire, ledit organe de commande étant relié mécaniquement au support pour qu'un soulèvement manuel, par l'intermédiaire de l'organe de commande, dudit sous-ensemble de couvercle à l'encontre du poids de ce dernier, entraîne le rappel de l'organe de commande dans sa position de déverrouillage sous l'effet dudit poids du sous-ensemble de couvercle.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :

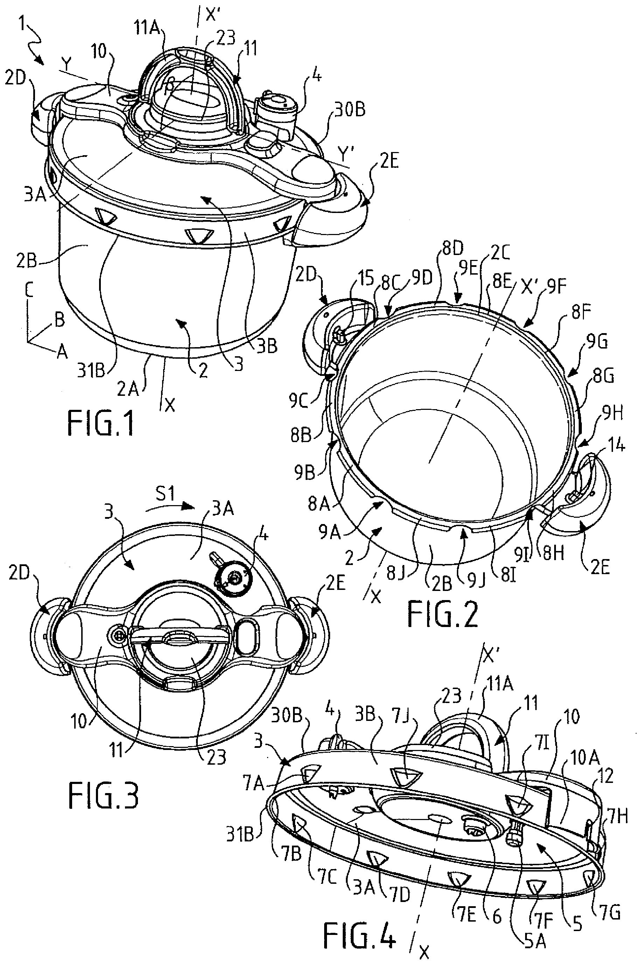

- La figure 1 illustre, selon une vue en perspective schématique, un appareil de cuisson d'aliments sous pression à verrouillage à baïonnette conforme à l'invention, dont le sous-ensemble de couvercle est en configuration de déverrouillage et est réuni avec la cuve selon l'agencement relatif prédéterminé (agencement de pré-verrouillage) permettant le verrouillage par rotation du couvercle, ledit agencement relatif correspondant à une configuration d'attente de verrouillage de l'appareil, dont l'organe de commande du verrouillage/déverrouillage se trouve dans une position déployée correspondant au déverrouillage du couvercle relativement à la cuve.
- La figure 2 illustre, selon une vue schématique en perspective de dessus, la cuve de l'autocuiseur de la figure 1, ladite cuve étant en l'espèce munie de deux poignées latérales permettant sa manipulation et son transport manuel.
- La figure 3 est une vue de dessus de l'autocuiseur de la figure 1.
- La figure 4 représente le sous-ensemble de couvercle en configuration de déverrouillage, prêt à venir coiffer la cuve de la figure 2 selon l'agencement relatif prédéterminé de pré-verrouillage illustré à la figure 1.
- La figure 5 représente l'autocuiseur des figures 1 à 4, le support n'étant pas représenté afin de permettre la visualisation du dispositif de transformation du déplacement manuel de l'organe de commande en pivotement du couvercle relativement au support.
- La figure 6 illustre, selon une vue schématique en perspective, une pièce en matière plastique formant le support omis dans la figure 5.
- La figure 7 illustre, selon une vue schématique en perspective, un détail de conception de l'autocuiseur des figures 1 à 6, permettant en particulier de visualiser la coopération du support et de la poignée de cuve pour verrouiller le positionnement angulaire relatif, dans un plan horizontal, du sous-ensemble de couvercle et de la cuve lorsque ces derniers sont réunis selon ledit agencement relatif prédéterminé de pré-verrouillage susvisé.
- La figure 8 illustre, selon une vue de dessous, le détail de conception de la figure 7, à la différence près que la poignée de cuve a été omise.
- La figure 9 illustre, selon une vue schématique en perspective, un détail de réalisation de l'autocuiseur des figures 1 à 8, concernant plus précisément l'organe de commande du verrouillage/déverrouillage et le dispositif de transformation du déplacement de l'organe de commande en pivotement du couvercle relativement au support.
- La figure 10 illustre, selon une vue de dessus, le détail de réalisation de la figure 9 à la différence près que l'organe de commande a été omis.
- La figure 11 est une vue de dessous du détail de réalisation de la figure 10.
- La figure 12 est une vue de dessous en perspective du détail de réalisation des figures 10 et 11.
- La figure 13 illustre le couvercle de l'autocuiseur des figures 1 à 12 sur lequel sont montées certaines des pièces formant le support, ainsi que le dispositif de transformation du déplacement manuel de l'organe de commande en pivotement du couvercle relativement au support.
- La figure 14 est une vue en coupe, selon le plan de coupe B-C, de l'autocuiseur de la figure1.
- La figure 15 est une vue en coupe, selon le plan de coupe A-C, de l'autocuiseur de la figure 1.
- La figure 16 illustre, selon une vue schématique en perspective, l'autocuiseur de la figure 1 avec cette fois le sous-ensemble de couvercle en configuration de verrouillage, de sorte que le couvercle est verrouillé relativement à la cuve, l'organe de commande étant rabaissé vers le couvercle dans une position rétractée correspondant audit verrouillage.
- La figure 17 illustre, selon une vue de dessus, l'autocuiseur de la figure 16.
- Les figures 18 à 21 sont des vues analogues respectivement à celles des figures 5, 8, 9 et 10, à la différence près que l'organe de commande est dans sa position rétractée correspondant au verrouillage du couvercle.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comporte au moins une cuve 2 formant récipient de cuisson, destinée à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Avantageusement, et comme illustré aux figures, l'appareil de cuisson 1 comprend au moins une poignée de cuve 2D qui est fixée à ladite cuve 2, de façon à faire saillie extérieurement de cette dernière. Dans le mode de réalisation illustré aux figures, ladite poignée de cuve 2D est montée sur la face externe de la paroi latérale 2B de la cuve 2, de façon à s'étendre radialement vers l'extérieur de la cuve et à former ainsi une prise destinée à être attrapée manuellement par l'utilisateur pour manipuler la cuve 2 (par exemple pour la soulever et la déplacer). Dans le mode de réalisation illustré aux figures, l'appareil de cuisson 1 comprend deux poignées identiques 2D, 2E fixées sur la paroi latérale 2B de la cuve 2 de façon diamétralement opposée par rapport à l'axe central X-X', lesdites poignées de cuve 2D, 2E étant en l'espèce disposées à proximité du bord supérieur libre 2C de la cuve 2. Il est toutefois parfaitement envisageable que la cuve 2 ne soit munie que d'une seule poignée de cuve, ou de plus de deux poignées de cuve (par exemple trois ou quatre), sans pour autant que l'on sorte du cadre de l'invention.

L'appareil 1 conforme à l'invention comprend également un couvercle 3 destiné à être associé à la cuve 2 et verrouillé relativement à cette dernière pour former une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité (non illustrée), formée de préférence par un joint annulaire souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur. Le couvercle 3 est de manière classique fabriqué à partir d'un matériau métallique tel que l'acier inoxydable ou l'aluminium. Il présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Dans le mode de réalisation illustré aux figures, le couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans ce mode de réalisation, le couvercle 3 inclut également avantageusement une ceinture annulaire 3B, par exemple de forme sensiblement cylindrique ou tronconique, qui s'élève entre un premier bord circulaire 30B solidaire de l'élément de couverture discoïde 3A (en l'espèce au niveau de la périphérie de ce dernier) et un second bord circulaire libre 31B, lequel est par exemple lui-même prolongé par une collerette terminale. Comme illustré aux figures, l'élément de couverture discoïde 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la ceinture annulaire 3B s'étend sensiblement verticalement, c'est-à-dire parallèlement à l'axe central X-X', la collerette terminale s'étendant quant à elle sensiblement horizontalement. Cela n'exclut bien entendu aucunement que l'élément de couverture discoïde 3A puisse être, tel qu'illustré aux figures, légèrement bombé ou incurvé localement, par exemple pour accueillir un mécanisme de commande. Dans le mode de réalisation illustré aux figures, la ceinture annulaire 3B est formée par un bord tombant qui s'étend vers le bas à partir de la périphérie de l'élément de couverture discoïde 3A. Dans ce mode de réalisation, le couvercle 3 est destiné à venir coiffer de façon sensiblement ajustée le sommet de la cuve 2, de sorte que la ceinture annulaire 3B entoure par l'extérieur le sommet de la paroi latérale annulaire 2B et le bord supérieur libre 2C, tandis que l'élément de couverture discoïde 3A repose en appui sur le bord libre 2C, par l'intermédiaire du joint d'étanchéité interposé entre la cuve 2 et le couvercle 3. Il est cependant parfaitement envisageable que la ceinture annulaire 3B soit alternativement destinée à être insérée au sein de la cuve 2, de façon à être entourée par, et contenue dans, la cuve 2, sans pour autant que l'on sorte du cadre de l'invention.

L'appareil 1 de cuisson d'aliments sous pression conforme à l'invention comprend avantageusement un moyen de régulation de pression 4, comme par exemple une soupape, montée de préférence sur le couvercle 3, de façon par exemple à être portée directement par ledit couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, de préférence de l'ordre de 100 kPa. Le principe de fonctionnement général d'un tel moyen de régulation de pression est bien connu en tant que tel, de sorte qu'il n'est pas nécessaire de le décrire plus avant ici. L'appareil 1 de cuisson d'aliments sous pression peut comporter d'autres organes de fonctionnement (par exemple un moyen de sécurité à l'ouverture 5 qui sera décrit plus en détails dans ce qui suit, une soupape de sécurité à la surpression 6, etc.). La cuve 2 et le couvercle 3 constituent ainsi des enveloppes respectives complémentaires, de préférence métalliques, qui une fois associées forment une enveloppe métallique résultante délimitant un volume fermé au sein duquel les aliments sont destinés à cuire sous pression de vapeur.

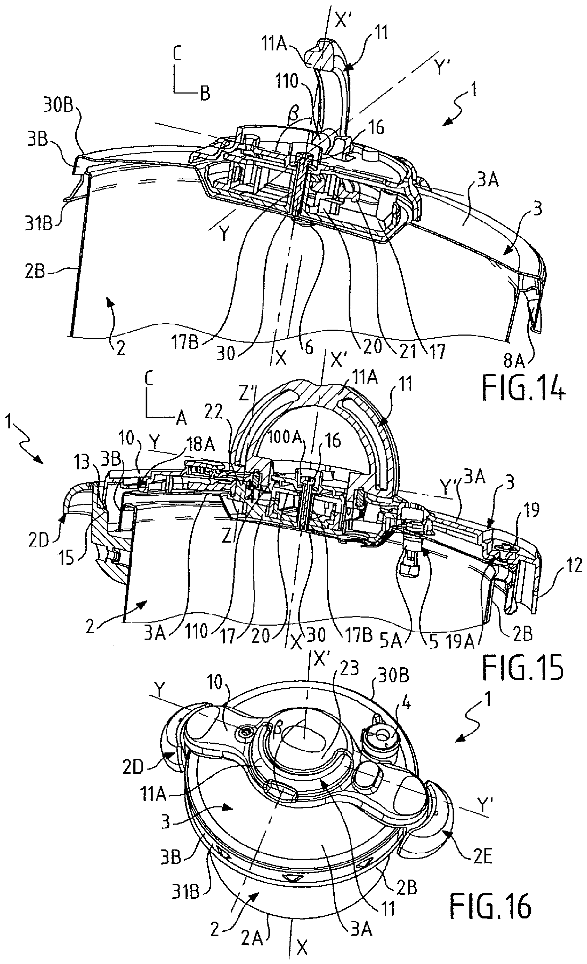

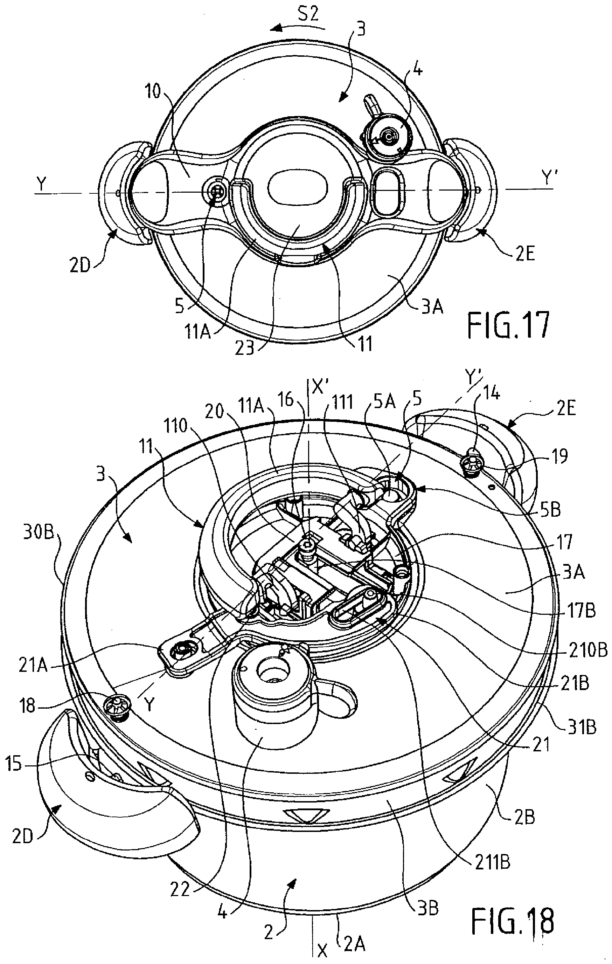

L'appareil 1 conforme à l'invention comporte également un système de verrouillage à baïonnette, afin de permettre à l'enceinte de cuisson formée par l'association du couvercle 3 et de la cuve 2 d'atteindre au moins la pression de fonctionnement susvisée sans risque de voir le couvercle 3 échapper sous l'effet de la pression régnant au sein de l'enceinte. En d'autres termes, le système de verrouillage est conçu pour assurer une liaison mécanique entre la cuve 2 et le couvercle 3 qui soit suffisamment robuste pour empêcher le couvercle 3 de se séparer de la cuve 2 sous l'effet de la montée en pression au sein de l'enceinte de cuisson. Plus précisément, ledit système de verrouillage à baïonnette est conçu pour assurer le verrouillage et le déverrouillage du couvercle 3 relativement à la cuve 2, par pivotement du couvercle 3 relativement à la cuve 2 selon en l'espèce ledit axe vertical central X-X', pour faire ainsi passer l'appareil 1 d'une configuration d'attente de verrouillage, dans laquelle le couvercle 3 est rapporté sur la cuve 2 et repose librement sur cette dernière (figures 1 et 3), à une configuration de verrouillage dans laquelle la cuve 2 et le couvercle 3 interagissent pour empêcher leur libre séparation (figures 16 et 17), et inversement. Ainsi, dans le mode de réalisation illustré aux figures, l'appareil 1 passe de sa configuration d'attente de verrouillage à sa configuration de verrouillage par rotation du couvercle 3 relativement à la cuve 2 selon une course angulaire prédéterminée autour de l'axe central X-X', dans un sens horaire S1, et passe de sa configuration de verrouillage à sa configuration d'attente de verrouillage par rotation du couvercle 3 relativement à la cuve 2 selon ladite course angulaire prédéterminée autour de l'axe central X-X' dans un sens antihoraire opposé S2 (figures 3 et 17), étant entendu que l'inverse est tout à fait possible sans que l'on sorte du cadre de l'invention (sens S1 antihoraire et sens S2 horaire). Le système de verrouillage à baïonnette de l'appareil de cuisson 1 comprend avantageusement à cet effet des première et deuxième séries d'excroissances 7A-7J, 8A-8J qui sont solidaires respectivement du couvercle 3 et de la cuve 2 et qui sont conçus, afin d'assurer le verrouillage et le déverrouillage du couvercle 3 relativement à la cuve 2, pour venir s'engager, respectivement se dégager, mutuellement par rotation du couvercle 3 relativement la cuve 2 autour de l'axe vertical central X-X' selon ladite course angulaire prédéterminée. Comme cela est bien connu en tant que tel, les excroissances 7A-7J, 8A-8J de chacune desdites première et deuxième séries sont destinées à coopérer deux à deux, c'est-à-dire que chaque excroissance de l'une desdites séries est amenée, par rotation du couvercle 3 relativement à la cuve 2, à passer sous une excroissance correspondante de l'autre série pour verrouiller le couvercle 3 relativement la cuve 2. Dans le mode de réalisation illustré aux figures, les excroissances 7A-7J de la première série, solidaires du couvercle 3, font saillie radialement vers l'intérieur du couvercle 3, tandis que les excroissances 8A-8J de la deuxième série, solidaires de la cuve 2, font saillie radialement à partir de la face externe de la paroi latérale 2B de la cuve 2, vers l'extérieur de cette dernière. Il est cependant parfaitement envisageable que les excroissances de verrouillage 7A-7J du couvercle fassent saillie vers l'extérieur du couvercle 3 et que les excroissances 8A-8J de cuve fassent alors saillies radialement vers l'intérieur de cette dernière. L'invention n'est donc pas limitée à une configuration particulière des rampes de verrouillage du système à baïonnette, l'essentiel étant que les excroissances de couvercle 7A-7J et de cuve 8A-8J, formant respectivement des rampes de couvercle et de cuve, coopèrent ensemble par mise en rotation relative de la cuve 2 et du couvercle 3, en l'espèce selon l'axe vertical central X-X', pour que les rampes de couvercle viennent se positionner sous les rampes de cuve afin de réaliser une liaison mécanique entre la cuve 2 et le couvercle 3 capable de résister à la pression interne régnant dans l'enceinte de cuisson. Dans l'exemple illustré aux figures, chaque excroissance 7A-7J de couvercle est constituée par un élément en volume obtenu par une déformation volumique locale de la matière constitutive de l'enveloppe du couvercle 3, et plus précisément de la ceinture annulaire 3B le long de laquelle sont de préférence disposée, à intervalles réguliers ou non, les excroissances 7A-7J. Chaque excroissance forme ainsi une protubérance, qui vient de matière avec la ceinture annulaire 3B et qui fait saillie de ladite ceinture annulaire en définissant d'un côté une face intérieure convexe et de l'autre côté, en « *négatif* », une face extérieure concave opposée correspondant par exemple à l'empreinte d'application d'un outil de formage, de préférence un outil d'emboutissage. L'invention n'est cependant absolument pas limitée à la mise en oeuvre d'excroissances 7A-7J spécifiques, et en particulier obtenues par emboutissage comme dans l'exemple illustre aux figures. Il est par exemple tout à fait envisageable que les excroissances 7A-7J de couvercle soient formées par des languettes plates obtenues par repliement localisé vers l'intérieur du bord libre 31B de la ceinture annulaire 3B du couvercle 3. Le recours à un élément en volume est toutefois préféré, car il permet d'obtenir aisément, par simple déformation de matière (emboutissage ou autre) une excroissance qui présente d'excellentes propriétés mécaniques et des dimensions réduites. Grâce à ces dimensions réduites, il est possible de faire passer l'appareil 1 de la configuration d'attente de verrouillage (configuration de pré-verrouillage) à la configuration de verrouillage par rotation relative du couvercle 3 et de la cuve 2 selon un angle relativement faible, par exemple inférieur à 30° étant entendu que l'invention n'est pas limitée à un angle particulier, lequel peut être supérieur ou égal à 30°, ou au contraire nettement inférieur à 30°, par exemple compris entre 10° et 25°. Dans l'exemple illustré aux figures, les excroissances 8A-8J de cuve sont formées par un rebord annulaire qui déborde vers l'extérieur à partir du bord supérieur libre 2C, des encoches 9A-9J étant ménagée à travers ledit rebord annulaire de façon à permettre le passage desdites excroissances 7A-7J de couvercle, de sorte que les portions dudit rebord annulaire qui s'étendent entre chaque encoche 9A-9J, forment les rampes de cuve respectives destinées à coopérer avec les excroissances 7A-7J de couvercle qui forment les rampes de couvercle. Ainsi, lorsque le couvercle 3 vient coiffer la cuve 2, les excroissances 7A-7J de couvercle peuvent passer par les encoches 9A-9J pour se retrouver plus bas que le rebord annulaire. L'appareil 1 se trouve alors dans sa configuration de pré-verrouillage (également appelée configuration d'attente de verrouillage), à partir de laquelle la configuration de verrouillage peut être atteinte en faisant simplement tourner le couvercle 3 relativement à la cuve 2 selon l'axe vertical X-X', ce qui a pour effet de décaler angulairement les excroissances 7A-7J du couvercle 3 et les encoches 9A-9J du rebord annulaire, réalisant un verrouillage de type « *à baïonnette* ». De préférence, dans le mode de réalisation illustré aux figures, les excroissances de couvercle 7A-7B sont localisées sur la ceinture annulaire 3B du couvercle 3 à distance du second bord libre circulaire 31B de ladite ceinture annulaire 3B, de manière à ce que la ceinture annulaire 3B forme, en deçà desdits éléments en volume, une jupe d'auto-centrage du couvercle 3 relativement à la cuve 2. Cette jupe annulaire permet, en coopération avec le rebord latéral quasi-continu (à l'exception des encoches 9A-9J) formant les rampes de cuve, au couvercle 3 de se positionner naturellement et spontanément de manière centrée relativement à la cuve 2 lorsqu'il est déposé sur cette dernière.

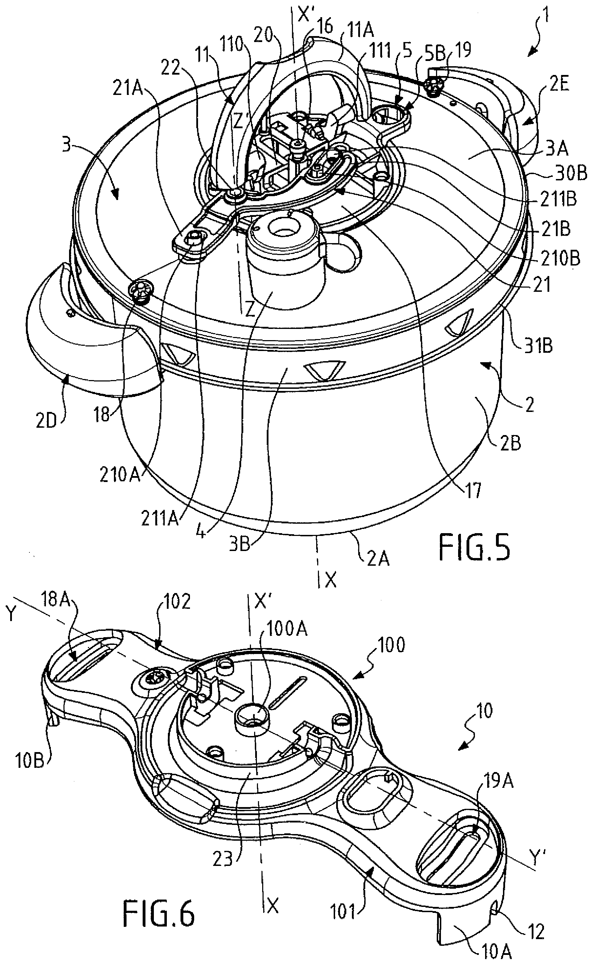

Conformément à l'invention, l'appareil 1 comprend un sous-ensemble de couvercle (illustré isolément par la figure 4) qui inclut à la fois le couvercle 3 et un support 10 attaché audit couvercle 3, en l'espèce de façon permanente, de façon que ce dernier puisse pivoter relativement audit support 10 entre deux positions correspondant respectivement à une configuration de déverrouillage et une configuration de verrouillage dudit sous-ensemble de couvercle. Les deux positions entre lesquelles le couvercle 3 peut pivoter relativement au support 10 sont séparées par une course angulaire prédéterminée correspondant à celle requise pour faire passer l'appareil 1 de sa configuration de pré-verrouillage (configuration d'attente de verrouillage) illustrée à la figure 1 à sa configuration de verrouillage illustrée par exemple à la figure 16. Le sous-ensemble de couvercle forme ainsi un élément unitaire indépendant destiné à être associé avec le sous-ensemble de cuve (formé par la cuve 2 elle-même et les poignées de cuve 2D, 2E), pour former l'enceinte de cuisson. Dans le mode de réalisation illustré aux figures, le couvercle 3 est ainsi monté à pivotement relativement audit support 10 selon l'axe vertical central X-X'. Cette liaison pivot entre le couvercle 3 et le support 10 peut être réalisée par tout moyen connu de l'homme du métier. Avantageusement, le support 10 se présente, dans le mode de réalisation illustré aux figures, sous la forme d'une traverse, c'est-à-dire d'une pièce sensiblement allongée qui s'étend diamétralement sur le couvercle 3 et qui se prolonge en l'espèce à chacune de ses extrémités par des bords tombants respectifs 10A, 10B. De préférence, la traverse en question comporte une zone centrale élargie 100, par exemple de forme globalement circulaire, prolongée de part et d'autre par un premier bras 101 et un deuxième bras 102 qui eux-mêmes se terminent respectivement par lesdits bords tombants 10A, 10B. La portion centrale 100 est avantageusement pourvue d'un orifice central 100A dans lequel est destiné à être enfilé un axe 30 fixé sur le couvercle 3, au centre de ce dernier, et autour duquel le support 10 est destiné à tourner selon l'axe vertical central X-X'. L'axe 30 est par exemple soudé sur le couvercle 3 de façon à s'élever verticalement à partir du centre de ce dernier, et ainsi à pouvoir être inséré dans ledit orifice 100A. De préférence, l'axe 30 est pourvu d'un évidement fileté destiné à coopérer avec une vis 16 afin de fixer le support 10 au couvercle 3 tout en permettant au couvercle 3 de pivoter autour de l'axe 30. Avantageusement, le support 10 comprend, outre la pièce en forme de traverse illustrée à la figure 6, une platine 17 qui présente une forme globalement circulaire sensiblement complémentaire de celle de la portion centrale 100 de la traverse et qui est destinée à être interposée entre ladite traverse et la face supérieure du couvercle 3 pour former un boîtier destiné à accueillir au moins en partie un mécanisme de commande du pivotement du couvercle 3 relativement au support 10. Par exemple, conformément au mode de réalisation illustré aux figures, la platine 17 se présente sous la forme d'une coupelle en matière plastique pourvue d'un orifice central 17A, lequel se prolonge par un tube cylindrique vertical au sein duquel est destiné à être inséré l'axe 30. La traverse visible à la figure 6 est elle-même conçue pour être fixée (par exemple au moyen de plusieurs vis) de manière permanente à la platine 17, afin de former avec cette dernière un sous-ensemble de traverse unitaire, monobloc, maintenu sur le couvercle 3 au moyen de l'accouplement axe 30 / vis 16, lequel accouplement autorise le pivotement du couvercle 3 relativement au sous-ensemble de traverse précité formant en l'espèce le support 10.

Comme exposé précédemment, le couvercle 3 est conçu pour pivoter relativement au support 10 entre deux positions, savoir une première position (correspondant au verrouillage) et une deuxième position (correspondant au déverrouillage) séparées par une course angulaire prédéterminée. De préférence, la première position et/ou la deuxième position est (sont) une (des) position(s) stable(s). Il est cependant tout à fait envisageable que l'une ou l'autre desdites première et deuxième positions présente un caractère instable, de sorte que dès que le couvercle 3 s'éloigne de l'une et/ou l'autre desdites première et deuxième positions il est automatiquement rappelé dans l'autre position (par exemple par un ressort). Avantageusement, la première position et/ou la deuxième position est (sont) également une (des) position(s) de butée. Par exemple, dans le mode de réalisation illustré aux figures, l'appareil 1 comprend au moins un pion de guidage 18, et de préférence deux pions de guidage 18, 19 disposés de façon diamétralement opposée relativement à l'axe central X-X' et attachés au couvercle 3 de façon permanente (par exemple en étant soudés sur ce dernier de façon à s'élever verticalement de la surface externe dudit couvercle 3, en l'espèce à la périphérie de ce dernier, comme illustré aux figures). Chacun desdits pions de guidage 18, 19 est conçu pour coulisser au sein d'une gorge allongée complémentaire de guidage 18A, 19A ménagée dans le support 10, par exemple vers chaque extrémité dudit support 10. La longueur de chaque gorge 18A, 19A est adaptée en l'espèce à la course angulaire du couvercle 3 relativement au support 10. Chaque pion 18, 19 est en outre pourvu d'une tête de section élargie qui coopère avec les bords de la gorge correspondante 18A, 19A pour retenir verticalement le support 10 et l'empêcher de s'écarter verticalement du couvercle 3.

Conformément à l'invention, le sous-ensemble de couvercle en configuration de déverrouillage et la cuve 2 sont conçus pour être réunis selon au moins un agencement relatif prédéterminé (illustré par exemple aux figures 1 et 3) permettant audit système de verrouillage à baïonnette de verrouiller le couvercle 3 à la cuve 2 par pivotement du couvercle 3 afin de faire passer le sous-ensemble de couvercle de sa configuration de déverrouillage à sa configuration de verrouillage. En d'autres termes, lorsque le sous-ensemble de couvercle est en configuration de déverrouillage, le couvercle 3 et le support 10 sont positionnés l'un relativement à l'autre de telle manière que l'accostage du support 10 sur la cuve 2 selon une position prédéterminée, correspondant audit agencement relatif prédéterminé, permet de faire passer les rampes de couvercle 7A-7J en deçà des rampes de cuve 8A-8J par les encoches 9A-9J séparant lesdites rampes de cuve, le sous-ensemble de couvercle coiffant alors la cuve 2 dans une position d'attente, à partir de laquelle il suffira de faire pivoter le couvercle 3 relativement à la cuve 2 pour verrouiller le couvercle 3 relativement à la cuve 2. Ainsi, une fois la cuve 2 et le sous-ensemble de couvercle en configuration de déverrouillage réunis selon l'agencement relatif prédéterminé de pré-verrouillage illustré à la figure 1, il suffit de maintenir le support 10 en position relativement à la cuve 2 et de faire pivoter le couvercle 3 relativement au support 10 selon la course angulaire prédéterminée susvisée afin d'amener les rampes de couvercle 7A-7J en correspondance avec les rampes de cuve 8A-8J, sous ces dernières, verrouillant ainsi le couvercle 3 relativement à la cuve 2.

L'appareil 1 comprend par ailleurs un organe de commande 11 du verrouillage/déverrouillage, conçu en l'espèce pour être manipulé par l'utilisateur de façon à permettre à ce dernier de contrôler le système de verrouillage à baïonnette afin de pouvoir avantageusement faire passer, par actionnement manuel de l'organe de commande 11, le sous-ensemble de couvercle de sa configuration de verrouillage à sa configuration de déverrouillage et vice-versa, afin de pouvoir ainsi commander le passage de l'appareil 1 de sa configuration de pré-verrouillage (également appelée configuration d'attente de verrouillage - illustrée à la figure 1) à sa configuration de verrouillage (illustrée à la figure 16), et inversement. L'organe de commande 11 est attaché au support 10, en l'espèce de façon permanente, de façon à pouvoir être déplacé relativement à ce dernier entre des positions de verrouillage (figure 16) et de déverrouillage (figure 1). En d'autres termes, l'organe de commande 11 est avantageusement fixé de manière permanente au support 10 tout en conservant une faculté de mobilité relativement à ce dernier, de sorte qu'un utilisateur peut entraîner manuellement en déplacement l'organe de commande 11 relativement au support 10 de la position de déverrouillage à la position de verrouillage et inversement.

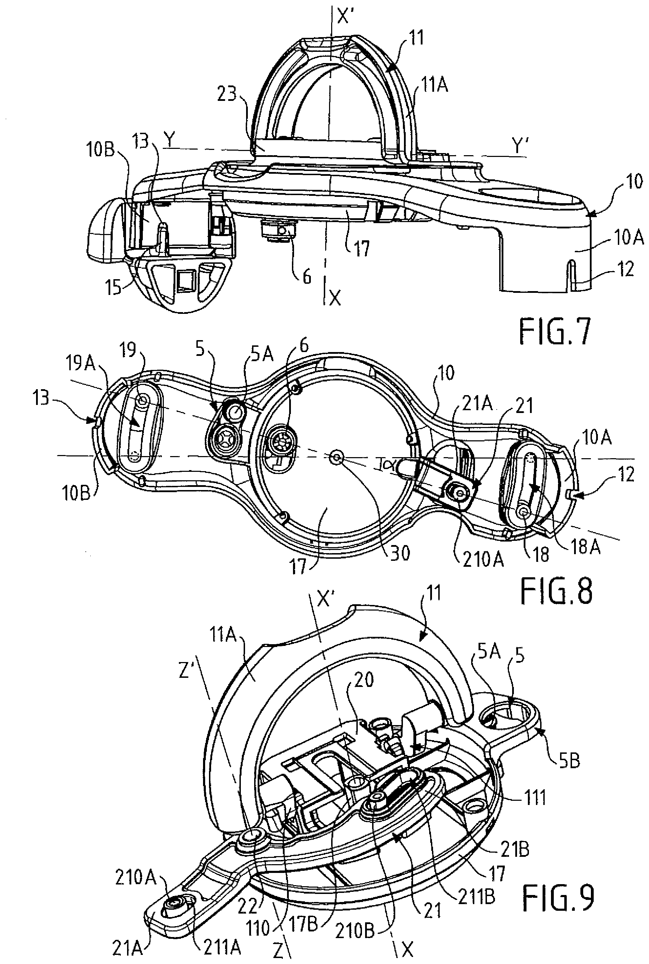

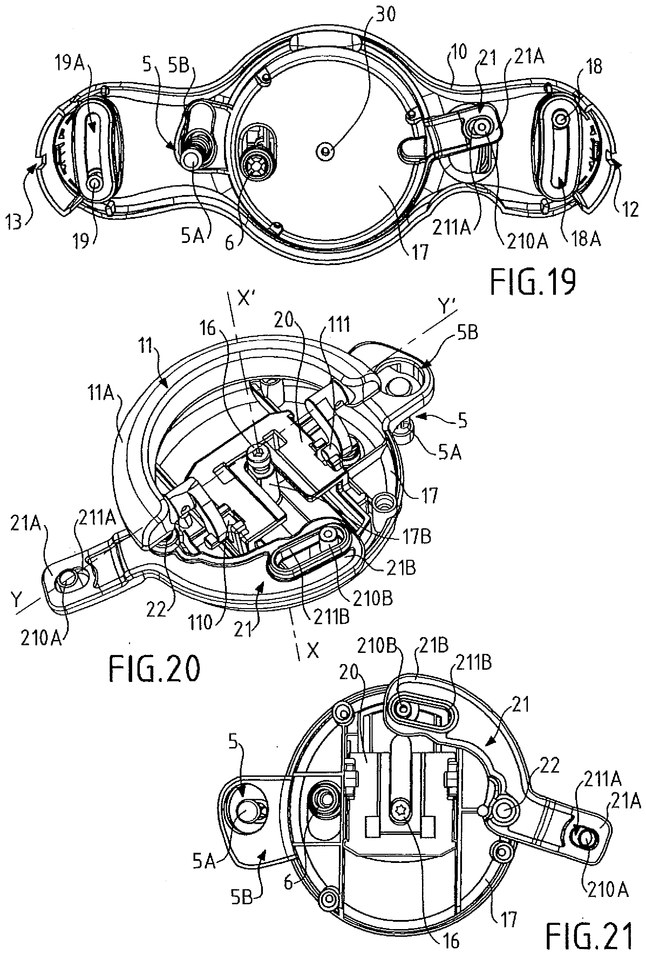

Conformément à l'invention, l'appareil 1 comprend également un dispositif de transformation du déplacement de l'organe de commande 11 en pivotement du couvercle 3 relativement au support 10, pour que lesdites positions de verrouillage et déverrouillage de l'organe de commande 11 correspondent respectivement auxdites configurations de verrouillage et déverrouillage du sous-ensemble de couvercle. L'utilisateur peut ainsi commander le passage du sous-ensemble de couvercle de sa configuration de déverrouillage à sa configuration de verrouillage, et vice versa, par déplacement manuel de l'organe de commande 11 relativement au support 10 entre ses positions de déverrouillage et de verrouillage, et inversement. Le dispositif de transformation, qui est en particulier visible aux figures 5, 9 à 13, 18, 20 et 21 est donc conçu pour convertir le mouvement de l'organe de commande 11 relativement au support 10 en mouvement rotatif du couvercle 3 relativement à ce même support 10, en l'espèce selon ledit axe vertical central X-X', de sorte que l'utilisateur peut ainsi commander le verrouillage/déverrrouillage par pivotement du couvercle 3 relativement au support 10 par simple manipulation de l'organe de commande 11, une fois le couvercle 3 rapporté sur la cuve 2 avec les rampes de couvercle disposées en deçà des rampes de cuve. Bien entendu, le dispositif de transformation susvisé est conçu en fonction de la nature du déplacement de l'organe de commande 11 relativement au support 10, et pourra mettre en oeuvre tout composant d'entraînement (roue dentée, came, levier, biellette, etc.) requis.

Avantageusement, les support 10 et cuve 2 sont conçus pour interagir, directement ou indirectement, dès lors que le sous-ensemble de couvercle en configuration de déverrouillage et la cuve 2 sont réunis selon ledit agencement relatif prédéterminé, afin de sensiblement empêcher le support 10 de pouvoir pivoter relativement à la cuve 2 (en l'espèce selon ledit axe vertical central X-X') lorsque l'organe de commande 11 est déplacé entre ses positions de verrouillage et de déverrouillage (ou inversement). En d'autres termes, la réunion du sous-ensemble de couvercle en configuration de déverrouillage et de la cuve 2 selon l'agencement relatif prédéterminé (agencement de pré-verrouillage) illustré à la figure 1 entraîne un inter-verrouillage du support 10 et de la cuve 2 empêchant en l'espèce le support 10 de tourner selon l'axe vertical central X-X' tout en reposant sur la cuve 2. Ce verrouillage de la position angulaire relative du support 10 et de la cuve 2 permet au support 10 de jouer le rôle d'un bâti fixe immobile relativement à la cuve 2 et par rapport auquel le couvercle 3 peut pivoter autour de l'axe vertical central X-X' selon une course angulaire prédéterminée pour passer d'un état déverrouillé (illustré à la figure 1) à un état verrouillé (illustré à la figure 16). De préférence, lesdits support 10 et cuve 2 sont pourvus respectivement de conformations de support 12, 13 et de cuve 14, 15 complémentaires destinées à coopérer par emboîtement lorsque le sous-ensemble de couvercle en configuration de verrouillage et la cuve 2 sont réunis selon ledit agencement relatif prédéterminé pour former l'enceinte de cuisson (figure 1). Ledit emboîtement des conformations complémentaires de support 12, 13 et de cuve 14, 15 permet de verrouiller la position angulaire relative du support 10 et de la cuve 2 dans un plan horizontal, perpendiculaire audit axe vertical central X-X'. Dans le mode de réalisation illustré aux figures, la cuve 2 est pourvue de deux conformations de cuve 14, 15 disposées de façon diamétralement opposée relativement à l'axe vertical central X-X' et fixées sur la face externe de la paroi latérale 2B de la cuve 2, tandis que le support 10 comporte deux conformations de support 12, 13 complémentaires disposées de façon diamétralement opposée sur le couvercle 3 relativement à l'axe vertical central X-X', lesdites conformations de support 12, 13 étant en l'espèce disposées en regard de la face extérieure de la ceinture annulaire 3B du couvercle 3. Il est cependant tout à fait envisageable, sans pour autant que l'on sorte du cadre de l'invention, que lesdits support 10 et cuve 2 soient pourvus respectivement d'une seule conformation de support et de cuve, ou même que les support 10 et cuve 2 soient pourvus, au lieu de conformations respectives de support et de cuve destinées à coopérer par emboîtement, d'éléments d'inter-verrouillage d'une autre nature reposant sur la mise en oeuvre d'une coopération de force (par friction, clipsage, engrènement, attraction magnétique...) suffisante pour verrouiller la position angulaire relative du support 10 et de la cuve 2. Avantageusement, chaque conformation de cuve 14, 15 forme un élément mâle tandis que chaque conformation de support 12, 13 forme un élément femelle complémentaire dudit élément mâle, ledit élément mâle étant avantageusement destiné à être inséré dans ledit élément femelle pour établir une liaison de blocage en rotation selon l'axe vertical central X-X' entre le support 10 et la cuve 2. Il est cependant tout à fait envisageable, sans pour autant que l'on sorte du cadre de l'invention, que chaque conformation de cuve 14, 15 forme un élément femelle tandis que chaque conformation de support 12, 13 forme un élément mâle. Avantageusement, ladite conformation de cuve 14, 15 est portée par ladite poignée de cuve 2D, 2E. Ainsi, dans le mode de réalisation illustré aux figures, chaque poignée de cuve 2D, 2E, fixée de manière permanente à la paroi latérale 2B de la cuve 2, embarque une conformation de cuve 14, 15 respective, qui se présente par exemple sous la forme d'une nervure formant un élément mâle. Comme exposé précédemment, le support 10 se présente quant à lui avantageusement sous la forme d'une traverse qui s'étend sur le couvercle 3 (en étant reliée à ce dernier par une liaison pivot) et qui se prolonge à chacune de ses extrémités par des bords tombants verticaux 10A, 10B respectifs, lesquels débordent radialement du couvercle 3 et s'étendent sensiblement parallèlement à la ceinture annulaire 3B, à l'extérieur de cette dernière. Une encoche est avantageusement ménagée dans le bord inférieur libre de chacun desdits bords tombants 10A, 10B du support 10, pour former un élément femelle complémentaire de la nervure formant préférentiellement l'élément mâle. Chacun desdits bords tombant 10A, 10B est en outre avantageusement destiné à venir s'insérer dans un logement de forme complémentaire ménagé entre la poignée 2D, 2E correspondante et la cuve 2, de façon à guider la trajectoire verticale descendante du couvercle 3 relativement à la cuve 2 lorsque le sous-ensemble de couvercle en configuration de déverrouillage est rapporté sur la cuve 2 par l'utilisateur pour réunir lesdits sous-ensemble de couvercle en configuration de déverrouillage et cuve 2 selon ledit agencement relatif prédéterminé.

Conformément à l'invention, ledit organe de commande 11 est conformé pour pouvoir être saisi manuellement afin de permettre la manipulation dudit sous-ensemble de couvercle par son intermédiaire. En d'autres termes, l'organe de commande 11 est conçu pour former une prise destinée à être attrapée, de préférence à une main, par un utilisateur, pour transporter et soulever le sous-ensemble de couvercle, en vue par exemple de le rapporter sur la cuve 2. De façon préférentielle, l'organe de commande 11 forme le seul organe de préhension du sous-ensemble de couvercle disponible, c'est-à-dire que l'appareil 1 est pourvu d'un organe de préhension du sous-ensemble de couvercle qui est uniquement et exclusivement formé par l'organe de commande 11. Ainsi, l'organe de commande 11 assure une double fonction, savoir une fonction d'organe de préhension, permettant à l'utilisateur d'attraper par son intermédiaire le sous-ensemble de couvercle pour le soulever et le déplacer, par exemple en vue de le rapporter sur la cuve 2 ou au contraire de le séparer de la cuve 2 et une fonction de commande du verrouillage/déverrouillage par contrôle du pivotement du couvercle 3 relativement au support 10.

Conformément à l'invention, l'organe de commande 11 est relié mécaniquement audit support 10 pour qu'un soulèvement manuel, par l'intermédiaire de l'organe de commande 11, dudit sous-ensemble de couvercle à l'encontre du poids de ce dernier, entraîne le rappel de l'organe de commande 11 dans sa position de déverrouillage sous l'effet du poids du sous-ensemble de couvercle. En d'autres termes, la liaison mécanique reliant l'organe de commande 11 au support 10 est conçue pour permettre à l'organe de commande 11 de gagner spontanément sa position de déverrouillage, ou de se maintenir dans cette dernière, lorsque s'exerce sur l'organe de commande 11 un effort de réaction au poids du sous-ensemble de couvercle. Grâce à cette caractéristique technique, le sous-ensemble de couvercle est rappelé et maintenu naturellement et spontanément dans sa configuration de déverrouillage lorsque l'utilisateur soulève le sous-ensemble de couvercle par l'organe de commande 11, utilisé comme une poignée de préhension. Ainsi, lorsque l'utilisateur rapporte le sous-ensemble de couvercle sur la cuve 2 en faisant coopérer les conformations de support 12, 13 et de cuve 14, 15, le sous-ensemble de couvercle se trouve naturellement et spontanément en configuration de déverrouillage, ce qui permet d'atteindre aisément l'agencement relatif prédéterminé de pré-verrouillage illustré à la figure 1. La liaison mécanique entre l'organe de commande 11 et le support 10 permet donc de faire passer l'organe de commande 11 de sa position de verrouillage à sa position de déverrouillage en soulevant simplement le sous-ensemble de couvercle à l'encontre de son poids, par l'intermédiaire de l'organe de commande 11, puis de maintenir ensuite l'organe de commande 11 dans sa position de déverrouillage tant que le sous-ensemble de couvercle reste soulevé à l'encontre de son poids par l'intermédiaire de l'organe de commande 11.

Bien entendu, il existe différentes possibilités pour relier mécaniquement l'organe de commande 11 au support 10 afin d'obtenir la fonction souhaitée de rappel de l'organe de commande 11 dans sa position de déverrouillage sous l'effet du poids du sous-ensemble de couvercle. Avantageusement, la liaison mécanique reliant l'organe de commande 11 au support 10 est conçu pour que le déplacement manuel de l'organe de commande 11 relativement au support 10 soit formé par au moins (i) un déplacement en rotation de l'organe de commande 11 autour d'un axe de rotation Y-Y' parallèle à une direction sécante à l'axe vertical central X-X', par exemple une direction radiale, et/ou (ii) par au moins un déplacement en translation de l'organe de commande 11, par exemple dans un plan vertical parallèle audit axe vertical central X-X'. La mise en oeuvre d'un déplacement manuel de l'organe de commande 11 conforme à l'une et/ou l'autre des deux possibilités préférentielles (i) et (ii) exposées ci-dessus évite en effet tout risque de voir la cuve 2 entraînée intempestivement en rotation autour de l'axe X-X' lorsque l'organe de commande 11 est déplacé manuellement relativement au support 10, alors que l'autocuiseur 1 se trouve en configuration de pré-verrouillage (configuration illustrée par la figure 1, dans laquelle le support 10 et la cuve 2 interagissent pour verrouiller la position angulaire relative du support 10 et de la cuve 2). L'invention permet au contraire de garantir à l'utilisateur qu'il peut verrouiller le couvercle 3 relativement à la cuve 2 à l'aide d'une seule et même main, uniquement en manipulant l'organe de commande 11, sans qu'il ne soit besoin d'immobiliser avec une deuxième main la cuve 2, et ce quels que soient les effets de friction susceptible d'exister, du fait notamment de l'interposition du joint d'étanchéité annulaire, entre la cuve 2 et le couvercle 3. En outre, la mise en oeuvre d'un déplacement de l'organe de commande 11 selon l'une ou l'autre des deux possibilités préférentielles (i) et (ii) exposées ci-dessus se prête particulièrement bien à l'obtention d'un rappel de l'organe de commande 11 dans sa position de déverrouillage sous l'effet du poids du sous-ensemble de couvercle.

Avantageusement, ledit organe de commande 11 est relié mécaniquement au support 10 pour que le déplacement dudit organe de commande 11 entre ses positions de déverrouillage et verrouillage (et vice versa) soit formé par au moins un déplacement en rotation de l'organe de commande 11 autour d'un axe de rotation Y-Y' parallèle à une direction sécante à l'axe vertical central X-X' et/ou par au moins un déplacement en translation de l'organe de commande 11. Par exemple, l'organe de commande 11 peut être monté à rotation pure autour d'un axe de rotation qui s'étend selon une direction sécante à la direction de l'axe vertical central X-X', et de façon encore plus préférentielle selon un axe de rotation sécant à l'axe vertical central X-X', ou alternativement être monté en translation relativement au support 10, par exemple à coulissement vertical (préférentiellement selon un axe de coulissement confondu à l'axe vertical central X-X') relativement audit support 10, ou encore être relié au support 10 par une liaison mécanique combinant une translation et une rotation (par exemple une liaison hélicoïdale d'axe X-X'). L'organe de commande 11 peut ainsi se présenter sous la forme d'un élément rotatif du type poignée, levier, manette, anse... et/ou d'un élément coulissant tel qu'un bouton-poussoir, un curseur, etc. Dans le mode de réalisation préférentiel illustré aux figures, l'organe de commande 11 est monté à pivotement relativement audit support 10 selon un axe radial Y-Y' de pivotement qui est perpendiculaire à l'axe vertical central X-X', et est sécant à ce dernier. Une telle liaison pivot selon un axe radial Y-Y' conduit à un déplacement de l'organe de commande 11 relativement au support 10 qui est formé uniquement par un déplacement en rotation selon un axe Y-Y' perpendiculaire à l'axe X-X' de pivotement du couvercle 3 relativement au support 10, ce qui permet d'éviter toute mise en rotation intempestive de la cuve 2. Un tel mouvement de rotation s'avère en outre être particulièrement ergonomique et intuitif. Surtout un tel mouvement de rotation se prête particulièrement bien à l'obtention de la fonction recherchée de rappel de l'organe de commande 11 dans sa position de déverrouillage sous l'effet du poids du sous-ensemble de couvercle. En effet, sous l'effet d'un effort de maintien et de retenue exercé sur l'organe de commande 11 en opposition au poids du sous-ensemble de couvercle, l'organe de commande 11 aura naturellement tendance à pivoter jusqu'à se retrouver dans une position verticale d'équilibre, dans laquelle il croise l'axe vertical central X-X'. Dans l'exemple préférentiel illustré aux figures, chaque poignée de cuve 2D, 2E s'étend extérieurement de ladite cuve 2 selon une direction radiale sensiblement parallèle audit axe radial Y-Y' de ladite liaison pivot reliant l'organe de commande 11 et le support 10. Une telle configuration, selon laquelle les poignées de cuve 2D, 2E sont alignées avec l'axe de rotation Y-Y' de l'organe de commande 11 relativement au support 10 s'avère être particulièrement pratique et ergonomique. Il est cependant tout à fait envisageable, sans pour autant que l'on sorte du cadre de l'invention, que la liaison mécanique entre l'organe de commande 11 et le support 10 soit une liaison pivot d'axe radial perpendiculaire à la fois à l'axe vertical central X-X' et à la direction radiale selon laquelle s'étendent lesdites poignées de cuve 2D, 2E.

Avantageusement, ledit dispositif de transformation comprend un mécanisme démultiplicateur conçu pour entraîner le couvercle 3 en rotation autour dudit axe vertical central X-X' selon une course présentant une première amplitude angulaire prédéterminée α, en réponse à une rotation dudit organe de commande 11 autour dudit axe radial Y-Y' selon une course présentant une seconde amplitude angulaire prédéterminée β supérieure à ladite première amplitude angulaire prédéterminée α. Par exemple, l'organe de commande 11 est conçu pour pivoter autour dudit axe radial Y-Y' entre une position relevée (correspondant au déverrouillage) et une position rabattue (correspondant au verrouillage) séparées par une course présentant une amplitude angulaire prédéterminée β d'environ 90°, tandis que le couvercle 3 pivote relativement au support 10, en réponse au déplacement angulaire d'environ 90° de l'organe de commande 11 relativement au support 10, selon une course présente une amplitude angulaire prédéterminée α d'environ 15°. Un tel mécanisme démultiplicateur permet ainsi de différencier nettement les positions de l'organe de commande 11 correspondant respectivement au verrouillage et au déverrouillage et de réduire les efforts exercés par l'utilisateur pour faire passer l'appareil de cuisson 1 de sa configuration d'attente de verrouillage à sa configuration de verrouillage. Il existe bien entendu une multitude de possibilités techniques pour obtenir un tel effet de démultiplication, et l'invention n'est pas limitée à un mécanisme démultiplicateur particulier. L'invention n'est d'ailleurs pas non plus limitée à la présence d'un tel mécanisme démultiplicateur, et il est par exemple tout à fait envisageable, sans pour autant que l'on sorte du cadre de l'invention, que le dispositif de transformation permettent des première et seconde amplitudes angulaires prédéterminées α, β sensiblement égales, voire à l'inverse une seconde amplitude angulaire prédéterminée β inférieure à la première amplitude angulaire prédéterminée α, en fonction de l'ergonomie et des fonctionnalités souhaitées.

Conformément au mode de réalisation illustré aux figures, le dispositif de transformation comprend une pièce de transmission 20 montée mobile en translation dans un plan horizontal perpendiculaire audit axe vertical central X-X' relativement audit support 10. La pièce de transmission 20 est ainsi montée à coulissement relativement au support 10, par exemple au sein du boîtier ménagé entre la platine 17 et la portion centrale 100 qui vient coiffer ladite platine 17. Dans ce mode de réalisation, le dispositif de transformation comprend un mécanisme de transformation du mouvement de pivotement de l'organe de commande 11 relativement au support 10 en mouvement de translation de ladite pièce de transmission 20 relativement audit support 10. Par exemple, le mécanisme de transformation en question est formé par une came 110, 111 solidaire de l'organe de commande 11, ladite came 110, 111 étant pourvue d'un pion qui est reçu dans un logement correspondant ménagé dans la pièce de transmission 20, de façon que le pivotement de l'organe de commande 11 entraîne le pivotement concomitant de la came 110, 111, laquelle repousse alors la pièce de transmission 20 dans le plan horizontal perpendiculaire à l'axe vertical central X-X'. L'invention n'est cependant absolument pas limitée à un mécanisme de transformation de mouvement à came, et il est par exemple parfaitement envisageable de recourir à tout autre mécanisme de transformation de mouvement connu sans pour autant que l'on sorte du cadre de l'invention. Par exemple, à titre alternatif, le mécanisme de transformation du pivotement de l'organe de commande 11 en translation de la pièce de transmission 20 peut consister en un mécanisme à engrenage reposant sur la coopération d'un secteur de couronne dentée solidaire de l'organe de commande 11 et d'une crémaillère rectiligne solidaire de la pièce de transmission 20. D'autres mécanismes (par exemple à biellette, à vis sans fin, à engrenage de roues dentées, *etc*.) sont bien évidemment envisageables. Avantageusement, le dispositif de transformation comprend, conformément au mode de réalisation illustré aux figures, au moins un levier horizontal 21 monté à pivotement relativement au support 10 selon un axe vertical excentré Z-Z' qui est fixe par rapport audit support 10, parallèle audit axe vertical central X-X' et situé à une distance prédéterminée de ce dernier. De préférence, comme illustré aux figures, ledit levier horizontal 21 s'étend longitudinalement entre une première extrémité 21A articulée au couvercle 3 et une deuxième extrémité 21B articulée soit audit organe de commande 11 soit à une pièce de transmission (comme par exemple la pièce de transmission 20 évoquée ci-avant) qui fait partie du dispositif de transformation et qui est entraînée en déplacement relativement au support 10 par l'organe de commande 11, par exemple selon le mode de réalisation exposé précédemment. De préférence, le levier horizontal 21 est pourvu d'un logement (formé par exemple par un orifice traversant) destiné à accueillir un axe 22 solidaire du support 10, et par exemple issu de la platine 17, de façon à réaliser une liaison pivot d'axe Z-Z' entre le levier horizontal 21 et le support 10. De préférence, ledit levier horizontal 21 est monté à pivotement relativement au support 10 en un point de pivotement situé entre lesdites première extrémité 21A et deuxième extrémité 21B, de sorte que l'axe vertical excentré Z-Z' passe par une zone du levier horizontal 21 qui est située à distance à la fois de la première et de la deuxième extrémité 21A, 21B. L'articulation de la première extrémité 21A relativement au couvercle 3 est par exemple réalisée au moyen d'un premier goujon 210A qui est solidaire du couvercle 3, et qui est par exemple soudé sur la face externe dudit couvercle 3 de manière à s'élever verticalement à partir de ce dernier. Ledit goujon 210A est avantageusement reçu dans une première gorge correspondante 211A ménagée à la première extrémité 21A du levier horizontal 21, de sorte que ledit premier goujon 210A peut à la fois coulisser et tourner dans la première gorge 211A en question. Le dispositif de transformation comporte également avantageusement un deuxième goujon 210B qui est en l'espèce solidaire de la pièce de transmission 20 et embarqué sur cette dernière. Ledit deuxième goujon 210B est avantageusement reçu dans une deuxième gorge complémentaire 211B ménagée à la deuxième extrémité 21B du levier horizontal 21, de façon que ledit deuxième goujon 210B puisse à la fois coulisser et pivoter dans la deuxième gorge 211B en question. Le levier horizontal 21 présente avantageusement une forme globale de faucille, avec un bras sensiblement rectiligne qui s'étend à partir de la première extrémité 21A jusqu'au point de rotation traversé par l'axe vertical excentré Z-Z', pour ensuite se prolonger par une portion arquée jusqu'à la deuxième extrémité 21B. Le déplacement en translation rectiligne de la pièce de transmission 20 dans le plan horizontal est converti en rotation du levier 21 autour de l'axe vertical excentré Z-Z', rotation qui est elle-même convertie en une rotation du couvercle 3 relativement au support 10 selon l'axe vertical central X-X'. L'invention n'est cependant absolument pas limitée à un tel mécanisme de transformation de mouvement et il est par exemple parfaitement envisageable de mettre en oeuvre, en lieu et place d'un système à levier comme illustré, un système à biellette, à came ou à engrenage, ou tout autre système connu, sans pour autant que l'on sorte du cadre de l'invention. Il est également parfaitement envisageable de mettre en oeuvre, en lieu et place d'un organe de commande 11 pivotant, un organe de commande 11 coulissant.

Avantageusement, et comme illustré aux figures, l'organe de commande 11 comprend une anse 11A destinée être actionnée manuellement afin de pouvoir être déplacée à la main par un utilisateur entre deux positions de butées, préférentiellement stables, correspondant respectivement au verrouillage et au déverrouillage. Dans ce mode de réalisation préféré l'organe de commande 11 se présente donc sous la forme d'une pièce arquée, en forme de boucle, d'arche, avantageusement conçue pour pouvoir être saisie fermement, de préférence à pleine main, par un utilisateur. L'invention n'est toutefois pas limitée à la mise en oeuvre d'une anse pour former l'organe de commande 11 et ce dernier peut par exemple être constitué par un levier sensiblement rectiligne, ou avec un profil en forme de T, de L, une forme de pommeau, de bouton évasé, etc., dont la conformation permet à l'utilisateur de soulever le sous-ensemble de couvercle par son intermédiaire.

L'organe de commande 11 est avantageusement conçu pour que son déplacement manuel (qu'il s'agisse d'une rotation et/ou d'une translation) relativement au support 10 puisse s'effectuer selon soit un sens de verrouillage soit un sens de déverrouillage opposé. Ainsi, dans ce mode de réalisation préférentiel, l'appareil de cuisson 1 comporte un seul et unique organe de commande 11 qui permet à un utilisateur de commander le pivotement du couvercle 3 relativement au support 10 à la fois dans le sens horaire S1 et dans le sens antihoraire S2. Dans ce cas, le dispositif de transformation de mouvement susvisé est conçu pour transformer le déplacement manuel de l'organe de commande 11 dans le sens du verrouillage, respectivement du déverrouillage, en pivotement du couvercle 3 relativement au support 10 autour dudit axe vertical central X-X' selon des sens de rotation respectifs opposés.

Avantageusement, comme illustré aux figures, l'organe de commande 11 est monté à pivotement relativement audit support 10 entre d'une part une position déployée (figure 1) qui forme ladite position de déverrouillage et dans laquelle ledit organe de commande 11 fait saillie verticalement, en l'espèce au droit du couvercle 3 vers l'extérieur, et d'autre part une position rétractée qui forme ladite position de verrouillage et dans laquelle ledit organe de commande 11 est rabaissé vers le couvercle 3. Dans sa position déployée, l'organe de commande 11 s'étend avantageusement selon une direction moyenne sensiblement parallèle audit axe vertical central X-X', tandis que dans sa position rétractée, il s'étend avantageusement selon une direction moyenne sensiblement perpendiculaire audit axe vertical central X-X', comme illustré aux figures. Dans ce mode de réalisation préférentiel, l'organe de commande 11 présente ainsi un caractère escamotable lui permettant de s'effacer lorsqu'il se trouve dans sa position rétractée.

De préférence, l'organe de commande 11 est plus difficile à saisir manuellement lorsqu'il se trouve en position rétractée que lorsqu'il se trouve en position déployée, ce qui limite la possibilité pour un utilisateur d'attraper l'organe de commande 11 afin de s'en servir pour soulever et manipuler l'appareil de cuisson 1, ce qui pourrait présenter un danger. Dans l'hypothèse où l'organe de commande 11 est formé par une anse 11A, le couvercle 3 présente avantageusement à sa surface un relief 23 dont la forme est de préférence sensiblement complémentaire à celle de l'espace vide délimité par ladite anse 11A destiné à recevoir les doigts de l'utilisateur. En d'autres termes, le relief 23 est conçu pour au moins partiellement combler l'espace vide intérieur délimité par l'anse 11A lorsque cette dernière est rabattue contre couvercle 3. Ainsi, lorsque l'anse 11A est complètement rabattue contre le couvercle 3, parallèlement à ce dernier (position rétractée de l'organe de commande 11), elle s'étend avantageusement dans la continuité du relief 23, limitant ainsi la possibilité pour l'utilisateur d'attraper l'anse 11A pour manipuler (*i*.*e*. soulever, transporter...) l'appareil de cuisson 1. En d'autres termes, l'organe de commande 11 est avantageusement conçu pour pouvoir être saisi manuellement afin de permettre le soulèvement manuel par son intermédiaire du sous-ensemble de couvercle uniquement lorsqu'il se trouve en position déployée. Dans le mode de réalisation préféré illustré aux figures, l'appareil 1 comprend un organe de préhension du couvercle 3 qui est attaché au couvercle 3 et est conçu pour être saisi manuellement afin de permettre la manipulation et le transport du couvercle 3 par son intermédiaire, ledit organe de préhension en question étant uniquement formé par l'organe de commande 11 en position déployée.

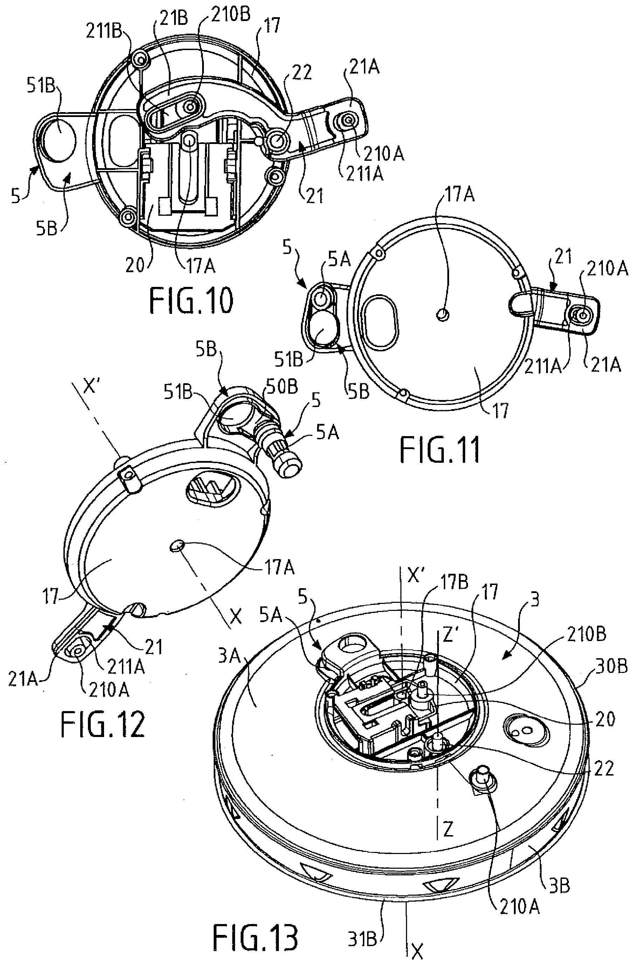

De préférence, le moyen de sécurité à l'ouverture 5 évoquée précédemment est susceptible d'évoluer, sous l'effet du niveau de pression régnant dans l'enceinte de cuisson, entre une configuration de libération, dans laquelle il autorise le déverrouillage du couvercle 3 relativement à la cuve 2, et une position de blocage, dans laquelle il interdit le déverrouillage du couvercle 3 relativement à la cuve 2. À cette fin, ledit moyen de sécurité 5 comprend un élément mobile 5A monté à coulissement sur le couvercle 3, et en l'espèce à coulissement vertical selon une direction de coulissement parallèle à l'axe vertical central X-X', entre une position haute (de butée) dans laquelle il est capable de coopérer avec un élément complémentaire de blocage 5B porté par le support 10, afin de bloquer le pivotement du couvercle 3 relativement au support 10, et une position basse (de butée) dans laquelle il n'interfère pas avec l'élément complémentaire 5B, autorisant ainsi le pivotement du couvercle 3 relativement au support 10. Comme cela ressort en particulier de la figure 12, l'élément mobile 5A est formé avantageusement par un doigt destiné à coulisser verticalement au sein d'un tube abouché à un orifice de fuite ménagé à travers le couvercle 3, de façon qu'en position haute le doigt vienne obturer hermétiquement l'orifice de fuite, alors qu'en position basse la vapeur est autorisée à fuir par l'orifice en question. L'élément complémentaire 5B est quant à lui de préférence formé par une pièce présentant une surface d'arrêt 50B et un orifice de passage 51B. Tant que le couvercle se trouve dans sa position de déverrouillage relativement au support 10, la surface de blocage 50B se trouve au droit de l'élément mobile 5A, sur la trajectoire de coulissement de ce dernier, afin de l'empêcher d'atteindre sa position haute et maintenir ainsi une mise en communication de l'intérieur de l'enceinte de cuisson avec l'extérieur, empêchant toute montée en pression significative de l'enceinte. Au contraire, lorsque le couvercle 3 atteint sa position de verrouillage, par pivotement relativement au support 10 selon la course angulaire prédéterminée évoquée précédemment, l'élément mobile 5A se retrouve alors au droit de l'ouverture 51B, ce qui autorise l'élément mobile 5A à atteindre, sous l'effet de la force motrice exercée par la montée en pression au sein de l'enceinte de cuisson, sa position haute d'étanchéité. Une fois en position haute, l'élément mobile 5A est entouré par les bords de l'orifice 51B, ce qui empêche tout pivotement du couvercle 3 relativement au support 10 dans le sens du déverrouillage.

Le fonctionnement de l'appareil de cuisson 1 illustré aux figures va maintenant être décrit brièvement. L'utilisateur remplit tout d'abord la cuve 2 illustrée à la figure 2 d'aliments à cuire, en positionnant éventuellement les aliments à distance du fond de la cuve 2, dans un panier de cuisson ajouré. L'utilisateur saisit ensuite le sous-ensemble de couvercle (illustré à la figure 4) par l'anse 11A pour soulever ledit sous-ensemble en vue de le rapporter sur la cuve 2 afin de fermer cette dernière. Sous l'effet du poids du couvercle 3 et des autres éléments composant le sous-ensemble de couvercle, l'anse 11A est rappelée en position verticale déployée, et est maintenue dans cette position, ce qui a pour effet de rappeler et maintenir spontanément le sous-ensemble de couvercle en configuration de déverrouillage. L'utilisateur utilise ainsi l'anse 11A comme poignée de transport pour venir rapporter le sous-ensemble de couvercle maintenu naturellement en configuration de déverrouillage sur la cuve 2, de façon à réunir lesdits sous-ensemble de couvercle en configuration de déverrouillage et cuve 2 selon ledit agencement relatif prédéterminé illustré à la figure 1, correspondant à l'emboîtement des conformations de support 12, 13 et de cuve 14, 15. L'autocuiseur 1 se trouve alors dans une configuration d'attente de verrouillage selon laquelle les rampes de couvercle 7A-7J se retrouvent plus bas que les rampes de cuve 8A-8J et décalées angulairement par rapport à ces dernières. Puis l'utilisateur rabat l'anse 11A selon une course angulaire β d'environ 90°, jusqu'à atteindre une position rabattue de butée illustrée notamment aux figures 16 et 17. Ce déplacement manuel de l'anse 11A de sa position déployée à sa position rabattue entraîne concomitamment le pivotement du couvercle 3 relativement au support 10 d'un angle α d'environ 15°, permettant ainsi aux rampes de couvercle 7A-7J de venir en correspondance sous les rampes de cuve 8A-8J selon une configuration de verrouillage permettant la montée en pression. A l'issue du cycle de cuisson, et une fois la pression régnant au sein de l'enceinte retombée à un niveau prédéterminé de sécurité, l'utilisateur n'a plus qu'à relever l'anse 11A pour faire pivoter le couvercle 3 relativement au support 10 en sens inverse et désengager ainsi les rampes de cuve et de couvercle, permettant la séparation du couvercle 3 et de la cuve 2.

## Revendications

1. - Appareil de cuisson (1) d'aliments sous pression comportant une cuve (2), un couvercle (3), ainsi qu'un système de verrouillage à baïonnette, ledit appareil (1) comprenant un sous-ensemble de couvercle qui inclut à la fois ledit couvercle (3) et un support (10) attaché audit couvercle (3) de façon que ce dernier puisse pivoter relativement audit support (10) entre deux positions correspondant respectivement à une configuration de déverrouillage et une configuration de verrouillage dudit sous-ensemble de couvercle, le sous-ensemble de couvercle en configuration de déverrouillage et la cuve (2) étant conçus pour être réunis selon au moins un agencement relatif prédéterminé permettant audit système de verrouillage à baïonnette de verrouiller le couvercle (3) à la cuve (2) par pivotement du couvercle (3) afin de faire passer le sous-ensemble de couvercle de sa configuration de déverrouillage à sa configuration de verrouillage, ledit appareil (1) comprenant un organe de commande (11) du verrouillage/déverrouillage attaché audit support (10) de façon à pouvoir être déplacé relativement à ce dernier entre des positions de verrouillage et déverrouillage, ledit appareil (1) étant **caractérisé en ce qu'**il comprend un dispositif de transformation du déplacement de l'organe de commande (11) en pivotement du couvercle (3) relativement au support (10) pour que lesdites positions de verrouillage et déverrouillage correspondent respectivement auxdites configurations de verrouillage et déverrouillage, ledit organe de commande étant conformé pour pouvoir être saisi manuellement afin de permettre la manipulation du sous-ensemble de couvercle par son intermédiaire, ledit organe de commande (11) étant relié mécaniquement au support (10) pour qu'un soulèvement manuel, par l'intermédiaire de l'organe de commande (11), dudit sous-ensemble de couvercle à l'encontre du poids de ce dernier, entraîne le rappel de l'organe de commande (11) dans sa position de déverrouillage sous l'effet dudit poids du sous-ensemble de couvercle.

2. - Appareil de cuisson (1) d'aliments sous pression selon la revendication 1 **caractérisé en ce que** lesdits support (10) et cuve (2) sont conçus pour interagir, dès lors que le sous-ensemble de couvercle en configuration de déverrouillage et la cuve (2) sont réunis selon ledit agencement relatif prédéterminé, afin de sensiblement empêcher ledit support (10) de pouvoir pivoter relativement à la cuve (2) lorsque l'organe de commande (11) est déplacé entre ses positions de déverrouillage et de verrouillage.

3. - Appareil de cuisson (1) d'aliments sous pression selon la revendication 2 **caractérisé en ce que** lesdits support (10) et cuve (2) sont pourvues respectivement de conformations de support (12, 13) et de cuve (14, 15) complémentaires destinées à coopérer par emboîtement lorsque le sous-ensemble de couvercle en configuration de déverrouillage et la cuve (2) sont réunis selon ledit agencement relatif prédéterminé, ledit emboîtement permettant de verrouiller la position angulaire relative du support (10) et de la cuve (2) dans un plan horizontal, chaque conformation de cuve (14, 15) formant de préférence un élément mâle tandis que chaque conformation de support (12, 13) forme de préférence un élément femelle complémentaire dudit élément mâle.

4. - Appareil de cuisson (1) d'aliments sous pression selon la revendication 3 **caractérisé en ce qu'**il comprend au moins une poignée de cuve (2D, 2E) qui est fixée à ladite cuve (2) de façon à faire saillie extérieurement de cette dernière, ladite conformation de cuve (14, 15) étant portée par ladite poignée de cuve (2D, 2E).

5. - Appareil de cuisson (1) d'aliments sous pression selon l'une des revendications 1 à 4 **caractérisé en ce qu'**il comporte un moyen de sécurité à l'ouverture (5) susceptible d'évoluer, sous l'effet du niveau de pression régnant dans l'appareil (1), entre une configuration de libération dans laquelle il autorise le déverrouillage du couvercle (3) relativement à la cuve (2), et une position de blocage, dans laquelle il interdit le déverrouillage du couvercle (3) relativement à la cuve (2), ledit moyen de sécurité (5) comprenant un élément mobile (5A) monté à coulissement sur le couvercle (3) entre une position haute dans laquelle il est capable de coopérer avec un élément complémentaire de blocage (5B) porté par le support (10), afin de bloquer le pivotement du couvercle (3) relativement au support (10), et une position basse dans laquelle il n'interfère pas avec l'élément complémentaire de blocage autorisant ainsi le pivotement du couvercle (3) relativement au support (10).

6. - Appareil de cuisson (1) d'aliments sous pression selon l'une des revendications 1 à 5 **caractérisé en ce que** ledit couvercle (3) est monté à pivotement relativement audit support (10) selon un axe vertical central (X-X'), ledit organe de commande (11) étant relié mécaniquement au support (10) pour que le déplacement dudit organe de commande entre ses positions de déverrouillage et verrouillage soit formé par au moins un déplacement en rotation de l'organe de commande (11) autour d'un axe de rotation (Y-Y') parallèle à une direction sécante à l'axe vertical central (X-X') et/ou par au moins un déplacement en translation de l'organe de commande (11).

7. - Appareil de cuisson (1) d'aliments sous pression selon la revendication 6 **caractérisé en ce que** ledit organe de commande (11) est monté à pivotement relativement audit support (10) selon un axe radial de pivotement qui est perpendiculaire audit axe vertical central (X-X').

8. - Appareil de cuisson (1) d'aliments sous pression selon les revendications 4 et 7 **caractérisé en ce que** ladite poignée de cuve (2D-2E) s'étend extérieurement de ladite cuve (2) selon une direction radiale sensiblement parallèle audit axe radial de pivotement (Y-Y').

9. - Appareil de cuisson (1) d'aliments sous pression selon la revendication 7 ou 8 **caractérisé en ce que** ledit dispositif de transformation comprend un mécanisme démultiplicateur conçu pour entraîner le couvercle (3) en rotation autour dudit axe vertical central (X-X') selon une course présentant une première amplitude angulaire prédéterminée (α) en réponse à une rotation dudit organe de commande (11) autour dudit axe radial de pivotement (Y-Y') selon une course présentant une seconde amplitude angulaire prédéterminée (β) supérieure à ladite première amplitude angulaire prédéterminée (α).

10. -Appareil de cuisson (1) d'aliments sous pression selon l'une des revendications 7 à 9 **caractérisé en ce que** ledit dispositif de transformation comprend une pièce de transmission monté mobile en translation dans un plan horizontal perpendiculaire audit axe vertical central (X-X') relativement audit support (10), ledit dispositif de transformation comprenant un mécanisme de transformation du pivotement de l'organe de commande (11) relativement audit support (10) en translation de ladite pièce de transmission (20) relativement audit support (10).

11. -Appareil de cuisson (1) d'aliments sous pression selon l'une des revendications 7 à 10 **caractérisé en ce que** ledit dispositif de transformation comprend au moins un levier horizontal (21) monté à pivotement relativement audit support (10) selon un axe vertical (Z-Z') excentré qui est fixe par rapport audit support (10), parallèle audit axe vertical central (X-X') et situé à une distance prédéterminée de ce dernier, ledit levier horizontal (21) s'étendant longitudinalement entre une première extrémité articulée au couvercle (3) et une deuxième extrémité (21B) articulée soit audit organe de commande (11) soit à une pièce de transmission (20) qui fait partie dudit dispositif de transformation et qui est entraîné en déplacement relativement audit support (10) par ledit organe de commande (11).

12. -Appareil de cuisson (1) d'aliments sous pression selon l'une des revendications 7 à 11 **caractérisé en ce que** ledit organe de commande (11) est monté à pivotement relativement audit support entre d'une part une position déployée qui forme ladite position de déverrouillage et dans laquelle ledit organe de commande (11) fait saillie verticalement, et d'autre part une position rétractée qui forme ladite position de verrouillage et dans laquelle ledit organe de commande (11) est rabaissé vers le couvercle (3).

13. -Appareil de cuisson (1) d'aliments sous pression selon la revendication 12 **caractérisé en ce qu'**il comprend un organe de préhension du couvercle (3) qui est attaché au couvercle (3) et est conçu pour être saisi manuellement afin de permettre la manipulation et le transport du couvercle (3) par son intermédiaire, ledit organe de préhension étant uniquement formé par ledit organe de commande (11) en position déployée.

14. -Appareil de cuisson (1) d'aliments sous pression selon l'une des revendications 12 et 13 **caractérisé en ce que** dans sa position déployée, ledit organe de commande s'étend selon une direction moyenne sensiblement parallèle audit axe vertical central (X-X'), tandis que dans sa position rétractée il s'étend selon une direction moyenne sensiblement perpendiculaire audit axe vertical central (X-X').

15. -Appareil de cuisson (1) d'aliments sous pression selon l'une des revendications 1 à 14 caractérisé en ce ledit organe de commande (11) comprend une anse (11A).

## Patentansprüche

1. - Druckkochtopf (1) für Nahrungsmittel, umfassend eine Wanne (2), einen Deckel (3) sowie ein Bajonett-Verriegelungssystem, wobei der Kochtopf (1) eine Deckeluntereinheit umfasst, die den Deckel (3) einschließt, sowie eine Halterung (10), die am Deckel (3) befestigt ist, so dass dieser letztgenannte in Bezug zur Halterung (10) zwischen zwei Positionen, die einer Entriegelungskonfiguration bzw. einer Verriegelungskonfiguration der Deckeluntereinheit entsprechen, schwenken kann, wobei die Deckeluntereinheit in Entriegelungskonfiguration und die Wanne (2) derart ausgebildet sind, dass sie nach mindestens einer vorbestimmten relativen Anordnung zusammengefügt werden können, die es dem Bajonett-Verriegelungssystem ermöglicht, den Deckel (3) an der Wanne (2) durch Schwenken des Deckels (3) zu verriegeln, um die Deckeluntereinheit von ihrer Entriegelungskonfiguration in ihre Verriegelungskonfiguration übergehen zu lassen, wobei der Kochtopf (1) ein Steuerelement (11) der Verriegelung/Entriegelung umfasst, das an der Halterung (10) befestigt ist, um in Bezug zu dieser letztgenannten zwischen Verriegelungs- und Entriegelungspositionen verschoben werden zu können, wobei der Kochtopf (1) **dadurch gekennzeichnet ist, dass** er eine Vorrichtung zur Umwandlung der Verschiebung des Steuerelements (11) in ein Schwenken des Deckels (3) in Bezug zur Halterung (10) umfasst, so dass die Verriegelungs- und Entriegelungspositionen den Verriegelungs- bzw. Entriegelungskonfigurationen entsprechen, wobei das Steuerelement ausgebildet ist, um manuell erfasst werden zu können, um die Betätigung der Deckeluntereinheit durch seine Vermittlung zu ermöglichen, wobei das Steuerelement (11) mechanisch mit der Halterung (10) verbunden ist, so dass unter Vermittlung des Steuerelements (11) ein manuelles Anheben der Deckeluntereinheit gegen das Gewicht dieser letztgenannten zur Rückstellung des Steuerelements (11) in seine Entriegelungsposition unter der Wirkung des Gewichts der Deckeluntereinheit führt.

2. - Druckkochtopf (1) für Nahrungsmittel nach Anspruch 1, **dadurch gekennzeichnet, dass** die Halterung (10) und Wanne (2) ausgebildet sind, um zusammenzuwirken, sobald die Declceluntereinheit in Entriegelungskonfiguration und die Wanne (2) nach der vorbestimmten relativen Anordnung zusammengefügt sind, um im Wesentlichen die Halterung (10) daran zu hindern, in Bezug zur Wanne (2) schwenken zu können, wenn das Steuerelement (11) zwischen seinen Entriegelungs- und Verriegelungspositionen verschoben wird.

3. - Druckkochtopf (1) für Nahrungsmittel nach Anspruch 2, **dadurch gekennzeichnet, dass** die Halterung (10) und Wanne (2) mit komplementären Halterungs- (12, 13) und Wannenaufbauten (14, 15) versehen sind, die dazu bestimmt sind, durch Ineinanderstecken zusammenzuwirken, wenn die Deckeluntereinheit und die Wanne (2) in Entriegelungskonfiguration nach der vorbestimmten relativen Anordnung zusammengefügt sind, wobei es das Ineinanderstecken ermöglicht, die relative Winkelposition der Halterung (10) und der Wanne (2) in einer Horizontalebene zu verriegeln, wobei jeder Wannenaufbau (14, 15) vorzugsweise ein Einsteckelement bildet, während jeder Halterungsaufbau (12, 13) vorzugsweise ein zu dem Einsteckelement komplementäres Aufnahmeelement bildet.

4. - Druckkochtopf (1) für Nahrungsmittel nach Anspruch 3, **dadurch gekennzeichnet, dass** er mindestens einen Wannengriff (2D, 2E) umfasst, der an der Wanne (2) derart befestigt ist, dass er aus dieser letztgenannten herausragt, wobei der Wannenaufbau (14, 15) von dem Wannengriff (2D, 2E) getragen wird.

5. - Druckkochtopf (1) für Nahrungsmittel nach einem der Ansprüche 1 bis 4, **dadurch gekennzeichnet, dass** er ein Öffnungssicherungsmittel (5) umfasst, das geeignet ist, sich unter der Wirkung des in dem Kochtopf (1) herrschenden Druckniveaus zwischen einer Freigabeposition, in der es die Entriegelung des Deckels (3) in Bezug zur Wanne (2) gestattet, und einer Blockierungsposition, in der es die Entriegelung des Deckels (3) in Bezug zur Wanne (2) verhindert, zu bewegen, wobei das Sicherungsmittel (5) ein bewegliches Element (5A) umfasst, das auf dem Deckel (3) gleitend zwischen einer oberen Position, in der es mit einem komplementären Blockierungselement (5B), das von der Halterung (10) getragen wird, zusammenwirken kann, um das Schwenken des Deckels (3) in Bezug zur Halterung (10) zu blockieren, und einer unteren Position angebracht ist, in der es mit dem komplementären Blockierungselement nicht zusammenwirkt und so das Schwenken des Deckels (3) in Bezug zur Halterung (10) gestattet.

6. - Druckkochtopf (1) für Nahrungsmittel nach einem der Ansprüche 1 bis 5, **dadurch gekennzeichnet, dass** der Deckel (3) schwenkbar in Bezug zur Halterung (10) entlang einer vertikalen Zentralachse (X-X') angebracht ist, wobei das Steuerelement (11) mechanisch mit der Halterung (10) verbunden ist, so dass die Verschiebung des Steuerelements zwischen seinen Entriegelungs- und Verriegelungspositionen von mindestens einer Drehbewegung des Steuerelements (11) um eine Drehachse (Y-Y') parallel zur einer die vertikale Zentralachse (X-X') schneidenden Richtung und/oder von mindestens einer Translationsbewegung des Steuerelements (11) gebildet ist.

7. - Druckkochtopf (1) für Nahrungsmittel nach Anspruch 6, **dadurch gekennzeichnet, dass** das Steuerelement (11) schwenkbar in Bezug zur Halterung (10) entlang einer radialen Schwenkachse, die auf der vertikalen Zentralachse (X-X') senkrecht steht, angebracht ist.

8. - Druckkochtopf (1) für Nahrungsmittel nach den Ansprüchen 4 und 7, **dadurch gekennzeichnet, dass** sich der Wannengriff (2D-2E) außerhalb der Wanne (2) in eine Radialrichtung im Wesentlichen parallel zur radialen Schwenkachse (Y-Y') erstreckt.

9. - Druckkochtopf (1) für Nahrungsmittel nach Anspruch 7 oder 8, **dadurch gekennzeichnet, dass** die Umwandlungsvorrichtung einen Untersetzungsmechanismus umfasst, der ausgebildet ist, um den Deckel (3) in Drehung um die vertikale Zentralachse (X-X') entlang eines Weges zu bringen, der eine erste vorbestimmte Winkelamplitude (α) darstellt, als Antwort auf eine Drehung des Steuerelements (11) um die radiale Schwenkachse (Y-Y') entlang eines Weges, der eine zweite vorbestimmte Winkelamplitude (β) darstellt, die größer als die erste vorbestimmte Winkelamplitude (α) ist.

10. - Druckkochtopf (1) für Nahrungsmittel nach einem der Ansprüche 7 bis 9, **dadurch gekennzeichnet, dass** die Umwandlungsvorrichtung ein Übertragungsteil umfasst, das in Translation in einer Horizontalebene senkrecht auf der vertikalen Zentralachse (X-X') in Bezug zur Halterung (10) beweglich angebracht ist, wobei die Umwandlungsvorrichtung einen Mechanismus zur Umwandlung des Schwenkens des Steuerelements (11) in Bezug zur Halterung (10) in eine Translation des Übeuragungsteils (20) in Bezug zur Halterung (10) umfasst.

11. - Druckkochtopf (1) für Nahrungsmittel nach einem der Ansprüche 7 bis 10, **dadurch gekennzeichnet, dass** die Umwandlungsvorrichtung mindestens einen horizontalen Hebel (21) umfasst, der schwenkbar in Bezug zur Halterung (10) entlang einer exzentrischen Vertikalebene (Z-Z') angebracht ist, die in Bezug zur Halterung (10) fest ist, zur vertikalen Zentralebene (X-X') parallel ist und in einem vorbestimmten Abstand zu dieser letztgenannten angeordnet ist, wobei sich der horizontale Hebel (21) längs zwischen einem ersten Ende, das am Deckel (3) angelenkt ist, und einem zweiten Ende (21B), das entweder am Steuerelement (11) oder an einem Übertragungsteil (20) angelenkt ist, das Teil der Umwandlungsvorrichtung ist, erstreckt, und der in Bezug zur Halterung (10) durch das Steuerelement (11) in Verschiebung gebracht wird.

12. - Druckkochtopf (1) für Nahrungsmittel nach einem der Ansprüche 7 bis 11, **dadurch gekennzeichnet, dass** das Steuerelement (11) schwenkbar in Bezug zur Halterung zwischen einerseits einer ausgefahrenen Position, die die Entriegelungsposition bildet, und in der das Steuerelement (11) vertikal herausragt, und andererseits einer eingezogenen Position, die die Verriegelungsposition bildet und in der das Steuerelement (11) zum Deckel (3) abgesenkt ist, angebracht ist.

13. - Druckkochtopf (1) für Nahrungsmittel nach Anspruch 12, **dadurch gekennzeichnet, dass** er ein Element zum Ergreifen des Deckels (3) umfasst, das am Deckel (3) befestigt und derart ausgebildet ist, dass es manuell ergriffen werden kann, um die Betätigung und die Beförderung des Deckels (3) durch seine Vermittlung zu ermöglichen, wobei das Greifelement einzig von dem Steuerelement (11) in ausgefahrener Position gebildet ist.

14. - Druckkochtopf (1) für Nahrungsmittel nach einem der Ansprüche 12 und 13, **dadurch gekennzeichnet, dass** sich das Steuerelement in seiner ausgefahrenen Position entlang einer mittleren Richtung im Wesentlichen parallel zur vertikalen Zentralachse (X-X') erstreckt, während es sich in seiner eingezogenen Position in eine mittlere Richtung im Wesentlichen senkrecht auf der vertikalen Zentralachse (X-X') erstreckt.

15. - Druckkochtopf (1) für Nahrungsmittel nach einem der Ansprüche 1 bis 14, **dadurch gekennzeichnet, dass** das Steuerelement (11) einen Bügel (11A) umfasst.

## Claims

1. - A cooking utensil (1) for cooking food under pressure including a vessel (2), a lid (3), and a bayonet-fitting locking system, said utensil (1) including a lid subassembly that includes both said lid (3) and a support (10) attached to said lid (3) in such a manner that said lid can pivot relative to said support (10) between two positions corresponding respectively to an unlocking configuration and to a locking configuration of said lid subassembly, the lid subassembly in the unlocking configuration and the vessel (2) being designed to be united in at least one predetermined relative arrangement enabling said bayonet-fitting locking system to lock the lid (3) to the vessel (2) by the lid (3) being pivoted in order to cause the lid subassembly to go from its unlocking configuration to its locking configuration, said utensil (1) including a control member (11) for controlling the locking/unlocking, which member is attached to said support (10) in such a manner as to be movable relative to said support between a locking position and an unlocking position, said utensil (1) being **characterized in that** it includes a transformation device for transforming the movement of the control member (11) into pivoting of the lid (3) relative to the support (10) so that said locking and unlocking positions correspond respectively to said locking and unlocking configurations, said control member being shaped to be capable of being taken hold of manually in order to enable the lid subassembly to be manipulated via it, said control member (11) being connected mechanically to the support (10) so that said lid subassembly being lifted manually, via the control member (11), against the weight of said lid subassembly, causes the control member (11) to be urged back into its unlocking position under the effect of said weight of the lid subassembly.

2. - A cooking utensil (1) for cooking food under pressure according to claim 1, **characterized in that** said support (10) and said vessel (2) are designed to interact, whenever the lid subassembly in the unlocking configuration and the vessel (2) are united in said predetermined relative arrangement, in order substantially to prevent said support (10) from being able to pivot relative to the vessel (2) when the control member (11) is moved between its unlocking and locking positions.

3. - A cooking utensil (1) for cooking food under pressure according to claim 2, **characterized in that** said support (10) and said vessel (2) are provided respectively with support shaped portions (12, 13) and with vessel shaped portions (14, 15) that are mutually complementary and designed to co-operate by interfitting engagement when the lid subassembly in the unlocking configuration and the vessel (2) are united in said predetermined relative arrangement, said interfitting engagement making it possible to lock the relative angular position of the support (10) and of the vessel (2) in a horizontal plane, each vessel shaped portion (14, 15) forming preferably a male element while each support shaped portion (12, 13) forms preferably a female element complementary to said male element.

4. - A cooking utensil (1) for cooking food under pressure according to claim 3, **characterized in that** it includes at least one vessel handle (2D, 2E) that is fastened to said vessel (2) in such a manner as to project outwards from said vessel, said vessel shaped portion (14, 15) being carried by said vessel handle (2D, 2E).

5. - A cooking utensil (1) for cooking food under pressure according to any one of claims 1 to 4, **characterized in that** it includes opening safety means (5) that, under the effect of the level of pressure prevailing in the utensil (1), are suitable for going between a releasing configuration, in which they allow the lid (3) to be unlocked relative to the vessel (2), and a blocking position in which they prevent the lid (3) from being unlocked relative to the vessel (2), said safety means (5) including a moving element (5A) mounted to slide on the lid (3) between a high position in which it is capable of cooperating with a complementary blocking element (5B) carried by the support (10), in order to prevent the lid (3) from pivoting relative to the support (10), and a low position in which it does not interfere with the complementary blocking element, thereby allowing the lid (3) to pivot relative to the support (10).

6. - A cooking utensil (1) for cooking food under pressure according to any one of claims 1 to 5, **characterized in that** said lid (3) is mounted to pivot relative to said support (10) about a central vertical axis (X-X'), said control member (11) being connected mechanically to the support (10) so that moving said control member between its unlocking and locking positions is formed by at least a movement in rotation of the control member (11) about an axis of rotation (Y-Y') parallel to a direction intersecting the central vertical axis (X-X') and/or by at least a movement in translation of the control member (11).

7. - A cooking utensil (1) for cooking food under pressure according to claim 6, **characterized in that** said control member (11) is mounted to pivot relative to said support (10) about a radial axis of pivoting that is perpendicular to said central vertical axis (X-X').

8. - A cooking utensil (1) for cooking food under pressure according to claims 4 and 7, **characterized in that** said vessel handle (2D, 2E) extends outwardly from said vessel (2) in a radial direction that is substantially parallel to said radial axis of pivoting (Y-Y').

9. - A cooking utensil (1) for cooking food under pressure according to claim 7 or claim 8, **characterized in that** said transformation device includes a gearing mechanism designed to drive the lid (3) in rotation about said central vertical axis (X-X') over a stroke having a first predetermined angular amplitude (α), in response to said control member (11) being moved in rotation about said radial axis (Y-Y') over a stroke having a second predetermined angular amplitude (β) that is greater than said first predetermined angular amplitude (α).

10. - A cooking utensil (1) for cooking food under pressure according to any one of claims 7 to 9, **characterized in that** said transformation device includes a transmission part mounted to move in translation in a horizontal plane perpendicular to said central vertical axis (X-X') relative to said support (10), said transformation device including a transfonnation mechanism for transforming the pivoting of the control member (11) relative to said support (10) into movement in translation of said transmission part (20) relative to said support (10).

11. - A cooking utensil (1) for cooking food under pressure according to any one of claims 7 to 10, **characterized in that** said transformation device includes at least one horizontal lever (21) mounted to pivot relative to the support (10) about an off-center vertical axis (Z-Z') that is stationary relative to said support (10), that is parallel to said central vertical axis (X-X'), and that is situated at a predetermined distance from said central vertical axis, said horizontal lever (21) extending longitudinally between a first end (21A) hinged to the lid (3) and a second end (21B) hinged either to said control member (11) or to a transmission part (20) that is part of the transformation device and that is caused to move relative to the support (10) by said control member (11).

12. - A cooking utensil (1) for cooking food under pressure according to any one of claims 7 to 11, **characterized in that** said control member (11) is mounted to pivot relative to said support between firstly a deployed position that forms said unlocking position and in which said control member (11) projects vertically, and secondly a retracted position that forms said locking position and in which said control member (11) is lowered towards the lid (3).

13. - A cooking utensil (1) for cooking food under pressure according to claim 12, **characterized in that** it includes a graspable member for enabling the lid (3) to be taken hold of, which member is attached to the lid (3) and is designed to be taken hold of manually in order to enable the lid (3) to be manipulated and transported via it, said graspable member being formed solely by said control member (11) in the deployed position.

14. - A cooking utensil (1) for cooking food under pressure according to claim 12 and or claim 13, **characterized in that**, in its deployed position, said control member extends in a mean direction that is substantially parallel to said central vertical axis (X-X'), whereas in its retracted position, it extends in a mean direction that is substantially perpendicular to said central vertical axis (X-X').

15. - A cooking utensil (1) for cooking food under pressure according to any one of claims 1 to 14, **characterized in that** said control member (11) comprises a looped handle (11A).
